Europäisches Patentamt

**European Patent Office**

Office européen des brevets

(11) Veröffentlichungsnummer: **0 244 667**
A2

(12) **EUROPÄISCHE PATENTANMELDUNG**

(21) Anmeldenummer: 87105383.1

(22) Anmeldetag: **10.04.87**

(51) Int. Cl.⁴: **B 23 Q 3/12**

(30) Priorität: **09.05.86 DE 3615672**

(43) Veröffentlichungstag der Anmeldung: **11.11.87**
**Patentblatt 87/46**

(84) Benannte Vertragsstaaten: **DE FR GB IT SE**

(71) Anmelder: **SMW Schneider & Weisshaupt GmbH,**
**Wiesentalstrasse 28, D-7996 Meckenbeuren (DE)**

(72) Erfinder: **Hiestand, Karl, Mühlweg 2, D-7798 Pfullendorf**
**(DE)**

(74) Vertreter: **Engelhardt, Guido, Dipl.-Ing.,**
**Montafonstrasse 35 Postfach 1350,**
**D-7990 Friedrichshafen 1 (DE)**

(54) **Vorrichtung zur auswechselbaren Befestigung eines kraftbetätigten Werkstückhalters an der Drehspindel einer**
**Werkzeugmachine.**

(57) Eine Vorrichtung (1) zur auswechselbaren Befestigung eines Kraftspannfutters (11) an der Drehspindel (3) einer Werkzeugmaschine besteht aus einem das Kraftspannfutter (11) aufnehmenden an der Drehspindel (3) angebrachten Flansch (31) in Form eines Zentrier- und Spannteils, der zwei oder mehrere über den Umfang verteilt angeordnete stirnseitig abstehende Kopfbolzen (33) als Halteglieder aufweist, die in in den Futterkörper (12) des Spannfutters (11) eingearbeitete Ausnehmungen (21) einführbar und mit diesem verspannbar sind.

Durch diese Ausgestaltung ist es möglich, das Kraftspannfutter (11) bei einfacher Handhabung in kurzer Zeit an der Drehspindel (3) zu befestigen oder von dieser abzunehmen. Eine betriebssichere Halterung des Kraftspannfutters (11) ist stets gewährleistet.

0244667

DIPL.-ING. GUIDO ENGELHARDT   PATENTANWALT
7990 Friedrichshafen

SMW Schneider & Weißhaupt
GmbH

7996 Meckenbeuren

Vorrichtung zur auswechselbaren Befestigung
eines kraftbetätigten Werkstückhalters an
der Drehspindel einer Werkzeugmaschine

Durch die DE-OS 34 25 610 ist eine Vorrichtung bekannt, mittels der ein kraftbetätigter Werkstückhalter in Form eines Kraftspannfutters an der Drehspindel einer Werkzeugmaschine auswechselbar zu befestigen ist. Bei dieser Vorrichtung ist an der Drehspindel der Werkzeugmaschine ein Spannkopfkörper befestigt und zwischen diesem und dem Werkstückhalter ist des weiteren ein Spannkopf eingesetzt, in dem ein durch einen Stellantrieb verdrehbarer Ring gelagert ist, der keilförmige Riegelglieder aufweist. Diese wirken mit von dem Werkstückhalter rückseitig abstehenden lageorientiert anzuordnenden Zapfen zusammen, die mit entsprechend gestalteten Riegelaufnahmen ausgestattet sind. Bei entsprechender Stellung der Riegelglieder können die Zapfen in Aufnahmen des Spannkopfes eingeführt und durch Verdrehen des Stellantriebes, der durch einen Motor von außen antreibbar ist, greifen die Riegelglieder in die Riegelaufnahmen der Zapfen ein, so daß der Werkstückhalter auf einem Zentrieransatz verspannbar ist.

./.

- 12 -

0244667

Abgesehen von dem großen Baufaufwand, der bei dieser Vorrichtung unumgänglich ist, sind in dem Spannkopf zusätzlich radial verstellbar geführte Grundbacken notwendig, von denen über eine Stirnverzahnung die in dem Werkstückhalter eingesetzten Spannbacken mitgenommen werden. Auf diese Weise wird bei dieser Vorrichtung die Triebverbindung zwischen einer Zugstange und den Spannbacken bei Abnahme des Werkstückhalters gelöst. Des weiteren ist hierbei von Nachteil, daß der mit den Riegelgliedern versehene Ring schwimmend gelagert ist und somit Unwuchten auftreten können und daß die Abstützung des Werkstückhalters an dem Spannkopf nur über einen kegelig gestalteten Zentieransatz erfolgt, ohne daß eine Verdrehsicherung gegeben ist. Die Verbindungen zwischen dem Werkstückhalter und dem Spannkopf und/oder zwischen diesem und dem Spannkopfkörper können demnach z. B. durch Erschütterungen, da die Keilverriegelungen sich lösen, unterbrochen werden. Eine hohe Betriebssicherheit ist somit bei dieser bekannten Vorrichtung, zumal auch durch den auf den Stellantrieb aufzusetzenden Antriebsmotor die Handhabung bei einem Wechsel des Werkstückhalters umständlich ist, nicht gegeben.

Aufgabe der Erfindung ist es daher, eine Vorrichtung zur auswechselbaren Befestigung eines kraftbetätigten Werkstückhalters an der Drehspindel einer Werkzeugmaschine zu schaffen, die einfach in der konstruktiven Ausgestaltung und somit wirtschaftlich zu fertigen ist, mittels der aber dennoch bei einfacher Handhabung in kurzer Zeit ein Werkstückhalter an einer Drehspindel einer Werkzeugmaschine ausgetauscht werden kann. Vor allem soll gewährleistet sein, daß stets eine betriebssichere Befestigung des Werkstückhalters gewährleistet ist und daß dieser auch maschinell abgenommen oder aufgesetzt werden kann.

Auch sollen sowohl die Verbindung zwischen dem Kraftspannfutter und der Drehspindel der Werkzeugmaschine als auch die Verbindung zwischen dem Antriebsglied des Kraftspann-

./.

0244667

futters und einer Zugstange in einem Arbeitsgang und mit einem Mechanismus gleichzeitig hergestellt bzw. gelöst werden können, wobei dies entweder mit Hilfe der Drehspindel oder mittels eines Verdrehwerkzeuges leicht zu bewerkstelligen sein soll.

Gemäß der Erfindung wird dies dadurch erreicht, daß an der Drehspindel der Werkzeugmaschine ein den Werkstückhalter aufnehmender Flansch in Form eines Zentrier- und Spannteils angebracht ist, der zwei oder mehrere über den Umfang verteilt angeordnete stirnseitig abstehende Kopfbolzen als Halteglieder aufweist, die in in den Werkstückhalter eingearbeitete zugeordnete Ausnehmungen einführbar und mit dem Werkstückhalter verspannbar sind.

Sehr vorteilhaft ist es, wenn die Kopfbolzen durch eine Relativverdrehung der Drehspindel der Werkzeugmaschine gegenüber dem Flansch mit dem Werkstückhalter zu verspannen sind.

Bei dieser Ausgestaltung ist es angezeigt, zur axialen Verstellung der drehfest z. B. mittels eines in eine Nut eingreifenden Stiftes in dem Flansch gehaltenen Kopfbolzen diese in einfacher Ausgestaltung jeweils über ein Gewinde mit einem verdrehbar in dem Flansch gelagerten Verstellglied zu verbinden, die durch ein Antriebsglied gemeinsam betätigbar sind, wobei die Verstellglieder mit einem Zahnrad als Zwischenglied zu versehen sind, die in ein den Flansch umfassendes arretierbares Hohlrad als gemeinsames Antriebslgied eingreifen.

Um einen gleichmäßigen Anzug aller Kopfbolzen sicherzustellen und eine Drehmomentbegrenzung vorzunehmen, sollten die Zahnräder jeweils über ein beispielsweise durch eine Kugelraste gebildetes Schlagwerk mit den Verstellgliedern in Triebverbindung stehen.

./.

Damit die Axialverstellung der Kopfbolzen mit Hilfe
der Drehspindel vorgenommen werden kann, sollte das
Hohlrad mittels eines an einen ein- oder beidseitig
von Druckmittel beaufschlagbaren Kolben angebrachten
Raststiftes, der in eine in dieses eingearbeitete vorzugsweise achsparallel gerichtete Ausnehmung einführbar
ist, arretierbar sein.

Zur Axialverstellung der Kopfbolzen bei drehfester Drehspindel kanndagegen das Hohlrad mittels eines an dieses
ankuppelbaren Motors angetrieben werden.

Vorteilhaft ist es ferner, den Werkstückhalter mit in
Umfangsrichtung verlaufenden vorzugsweise jeweils eine
Hinterhakung aufweisenden Ausnehmungen zur Aufnahme
der mit einer beispielsweise durch einen angeformten
Bund gebildeten Hinterschneidung versehenen Kopfbolzen
auszustatten, die in einem Endbereich der Ausnehmugen
in diese einführbar sind.

Die die Kopfbolzen aufnehmenden Ausnehmungen des Werkstückhalters sollten des weiteren in dem anderen Endbereich jeweils mit einem diese in Umfangsrichtung
arretierenden Anschlag versehen sein, wobei der Anschlag
durch eine den Bund der Kopfbolzen aufnehmende Absenkung
gebildet sein kann.

Nach einer andersartigen Ausgestaltung ist es möglich,
die Kopfbolzen durch eine gemeinsame radiale Verstellung
an diesen jeweils angebrachter in die mit durch Vorsprünge
gebildeten Hinterschneidungen versehene Ausnehmungen
des Werkstückhalters eingreifende Hinterhakungen mit
diesem zu verriegeln.

./.

Zur Betätigung der drehfest z. B. in einer Ausnehmung des Flansches gehaltenen Kopfbolzen kann in einfacher Ausgestaltung ein zentrales Antriebsglied vorgesehen werden, das mit den Kopfbolzen unmittelbar oder über Zwischenglieder in Triebverbindung steht und mittels eines Verdrehwerkzeuges antreibbar ist.

Zur radialen Verstellung der Hinterhakungen der Kopfbolzen können an dem Flansch und/oder dem Werkstückhalter in Verstellrichtung der Kopfbolzen geneigte Schrägflächen angebracht sein, an denen diese ganz oder teilweise zwangläufig geführt sind, oder die Kopfbolzen können zur Längsachse des Flansches in Richtung des Werkstückhalters geneigt angeordnet werden.

Die Hinterhakungen der Kopfbolzen können in einfacher Weise durch an diesen angeformte radial abstehende Vorsprünge oder durch in diese eingesetzte durch an dem Werkstückhalter und/oder dem Flansch vorgesehene Schrägflächen radial verschiebbare Kulissensteine gebildet werden.

Besonders zweckmäßig ist es, die Kopfbolzen über ein in das Antriebsglied eingearbeitetes Innengewinde mit diesem unmittelbar trieblich zu verbinden, es ist aber auch möglich, die Kopfbolzen über ein mit einer Gewindespindel versehenen, verdrehbar in dem Flansch gelagertes Verstellglied als Zwischenglied mit dem Antriebsglied zu koppeln, wobei die Verstellglieder jeweils über eine Außenverzahnung oder ein mit diesen verbundenes Zahnrad mit dem in oder auf dem Flansch drehbar gelagerten, diesen teilweise umfassenden Antriebsglied und die mit den Verstellgliedern zusammenwirkenden Zahnräder jeweils über ein beispielsweise durch eine Kugelraste gebildetes Schlagwerk mit den Verstellgliedern in Triebverbindung stehen sollten.

./.

Zur Betätigung des Antriebsgliedes mittels des Verdrehwerkzeuges kann in dem Flansch ein Ritzel achssenkrecht
zu dessen Längsachse drehbar gelagert sein, über das
das Verdrehwerkzeug mit dem Antriebsglied verbindbar
ist, es ist aber auch möglich, dazu einen verstellbar
angeordneten über eine Außenverzahnung mit diesem trieblich verbindbarer Rotationsmotor vorzusehen.

Das Antriebsglied des Werkzeughalters ist zweckmäßigerweise über eine oder mehrere axial hintereinander angeordnete Klauenverzahnungen mit einer axial verstellbaren
Zugstange unmittelbar oder über ein Zwischenglied lösbar
zu kuppeln.

Zum Kuppeln des Antriebsgliedes mit der Zugstange oder
mit dem Zwischenglied durch eine Relativdrehung ist
es angebracht, deren Klauenverzahnungen mit in Umfangsrichtung verlaufenden Freisparungen zu versehen, in
die die an der Zugstange oder dem Zwischenglied und
dem Antriebsglied angeformten Klauenverzahnungen einführbar sind, wobei die Klauenverzahnungen und Freisparungen
der Zugstangen und des Antriebsgliedes zueinander jeweils
unter einem Winkel $\alpha_1$ anzuordnen sind, der dem Umfangswinkel $\alpha$ der die Kopfbolzen aufnehmenden Ausnehmungen
entspricht. Auf diese Weise kann mit einer Drehbewegung
die Verbindung des Werkstückhalters mit dem Flansch
und die Triebverbindung mit dem den Spannbacken zugeordneten Antriebsglied hergestellt bzw. gelöst werden.

Nach einer andersartigen Ausgestaltung kann aber auch
das Zwischenglied um einen der Teilung der Freisparungen
entsprechenden Winkel gleichzeitig mit dem Antriebsglied
der Kopfbolzen begrenzt verdrehbar angeordnet werden.

./.

Um dies zu bewerkstelligen, kann das Zwischenglied über ein Zahnradpaar mit dem dem Antriebsglied zugeordneten Ritzel trieblich verbunden und über eine radial verstellbar gehaltene Kugel, eine Federraste oder dgl. an dem zugeordneten Zahnrad begrenzt verdrehbar abgestützt werden.

Zum Kuppeln des Zwischengliedes mit dem Antriebsglied des Werkstückhalters können des weiteren die Klauen des Zwischengliedes an radial federnden Armen angebracht werden, die mittels einer diese umgreifenden axial in Abhängigkeit von der Lage der Kopfbolzen verschiebbaren Hülse in Eingriffstellung bringbar sind.

Vorteilhaft ist es ferner, den Flansch zur Aufnahme des Werkstückhalters stirnseitig mit einer kegeligen Zentrierfläche und diesen mit einer angepaßten Gegenfläche zu versehen.

Zur Abstützung des Werkstückhalters in einem Handhabungsgerät oder einem ähnlichen Transportmittel ist es des weiteren zweckmäßig, in dem Werkstückhalter zwei oder mehrere radial verstellbar eingesetzte Bolzen vorzusehen, die durch dessen Antriebsglieder betätigbar und in Ausnehmungen eines den Werkstückhalter umgreifenden Ringes des Handhabungsgerätes einführbar sind.

Die gemäß der Erfindung ausgebildete Vorrichtung ermöglicht es nicht nur, auf einfache Weise und ohne längere Rüstzeiten in Kauf nehmen zu müssen, einen Werkstückhalter an der Drehspindel einer Werkzeugmaschine auszuwechseln, sondern es ist auch stets eine betriebssichere Befestigung trotz geringem Bauaufwand gegeben. Wird nämlich an der Drehspindel ein Flansch in Form eines Zentrier- und Spannteils angebracht, der abstehende Kopfbolzen aufweist, die in den Werkstückhalter eingreifen und mit diesem

./.

durch eine Axialverschiebung, die durch eine Relativverdrehung der Maschinenspindel gegenüber dem Flansch oder mit Hilfe eines Verdrehwerkzeuges vorzunehmen ist, zu verspannen sind, so ist lediglich in einer entsprechenden Position der Werkstückhalter auf die Kopfbolzen sowie eine den Flansch durchgreifende Zugstange aufzustecken, um durch Betätigen der Kopfbolzen eine betriebs- sichere Befestigung herzustellen. Besondere Handhabungs- geräte und Antriebsmittel sind dazu nicht erforderlich, auch kann die Befestigung ohne weiteres maschinell erfolgen, zumal die Axialverstellung der Kopfbolzen ohne weiteres mittels der Drehspindel, in dem deren Verstellglieder entsprechend abgestützt werden, vorgenommen werden kann. Aufgrund der erfindungsgemäßen Ausgestaltung ist demnach ein Wechsel eines Werkstückhalters problemlos zu bewerkstelligen.

In der Zeichnung sind einige Ausführungsbeispiele einer gemäß der Erfindung ausgebildeten Vorrichtung zur aus- wechselbaren Befestigung eines kraftbetätigten Werkstück- halters an der Drehspindel einer Werkzeugmaschine dargestellt, die nachfolgend im einzelnen erläutert sind. Hierbei zeigen:

Figur 1    eine an einer Drehspindel einer Werkzeug maschine angebrachte Vorrichtung mit aufgespanntem Werkstückhalter in einem Axialschnitt,

Figur 2    die Vorrichtung nach Figur 1 mit gelöstem Werkstückhalter, ebenfalls in einem Axialschnitt,

Figur 3    einen Schnitt nach der Linie III - III der Figur 2,

Figur 4    einen Schnitt nach der Linie IV - IV der Figur 2,

./.

Figur 5    die Vorrichtung nach Figur 1 mit einem
           Antriebsmotor zur Betätigung der mit dem
           Kopfbolzen zusammenwirkenden Verstellglieder,
           ebenfalls in einem Axialschnitt,

Figur 6    eine andersartige Ausgestaltung einer Vorrichtung nach Figur 1 im Axialschnitt,

Figur 7    einen Ausschnitt aus Figur 6,

Figur 8    einen Schnitt nach der Linie VIII - VIII der
           Figur 6,

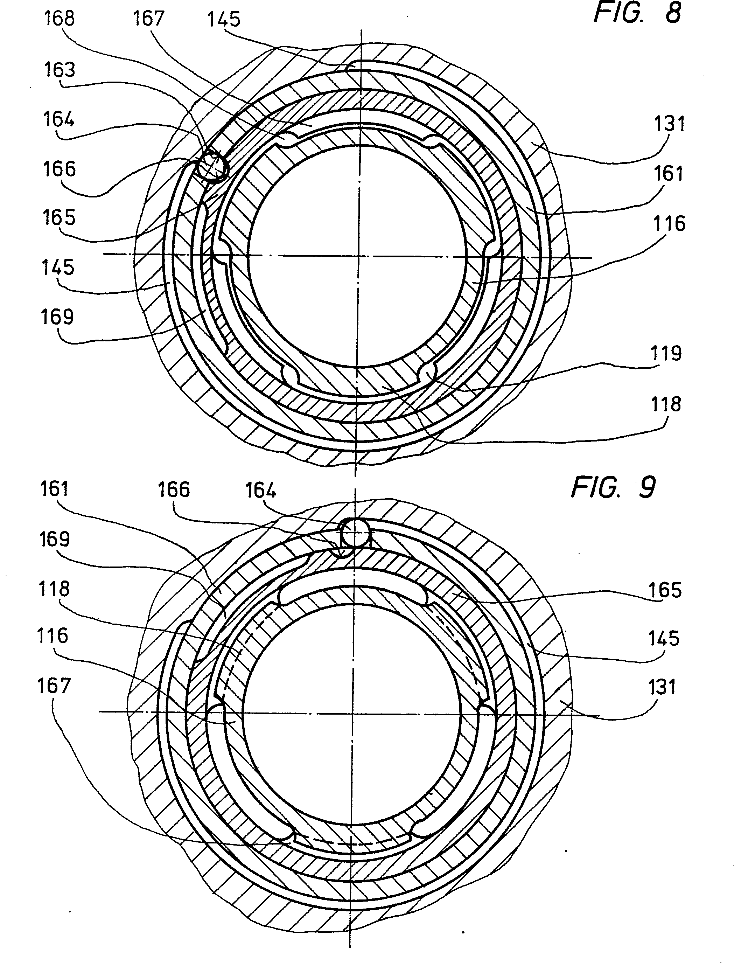

Figur 9    die Darstellung nach Figur 8 in einer anderen
           Betriebsstellung,

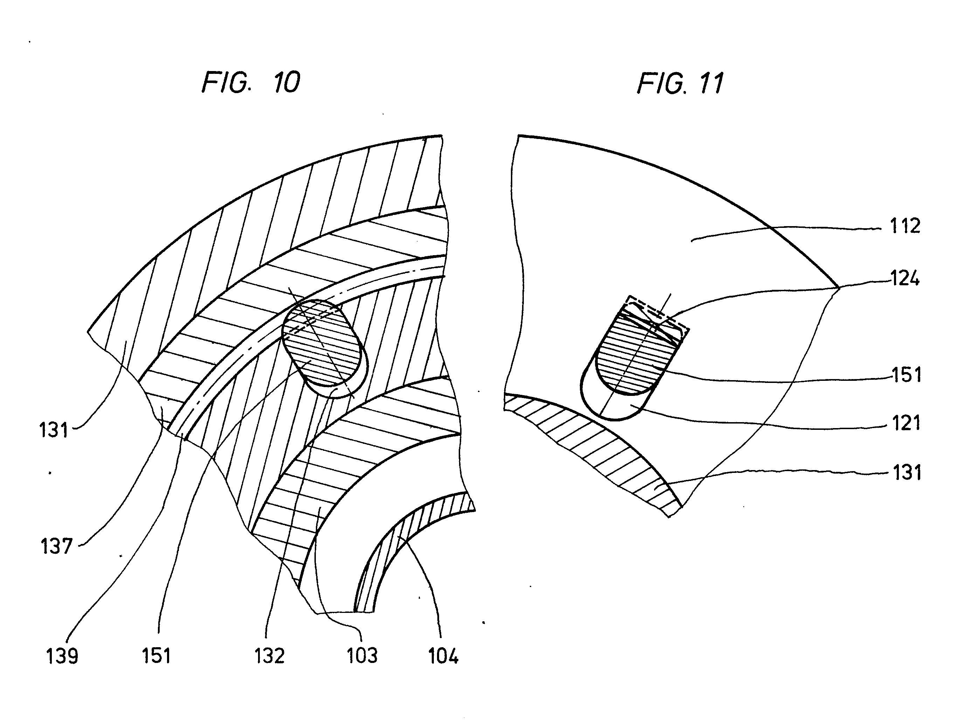

Figur 10   einen Schnitt nach der Linie X - X der
           Figur 6,

Figur 11   einen Schnitt nach der Linie XI - XI der
           Figur 6,

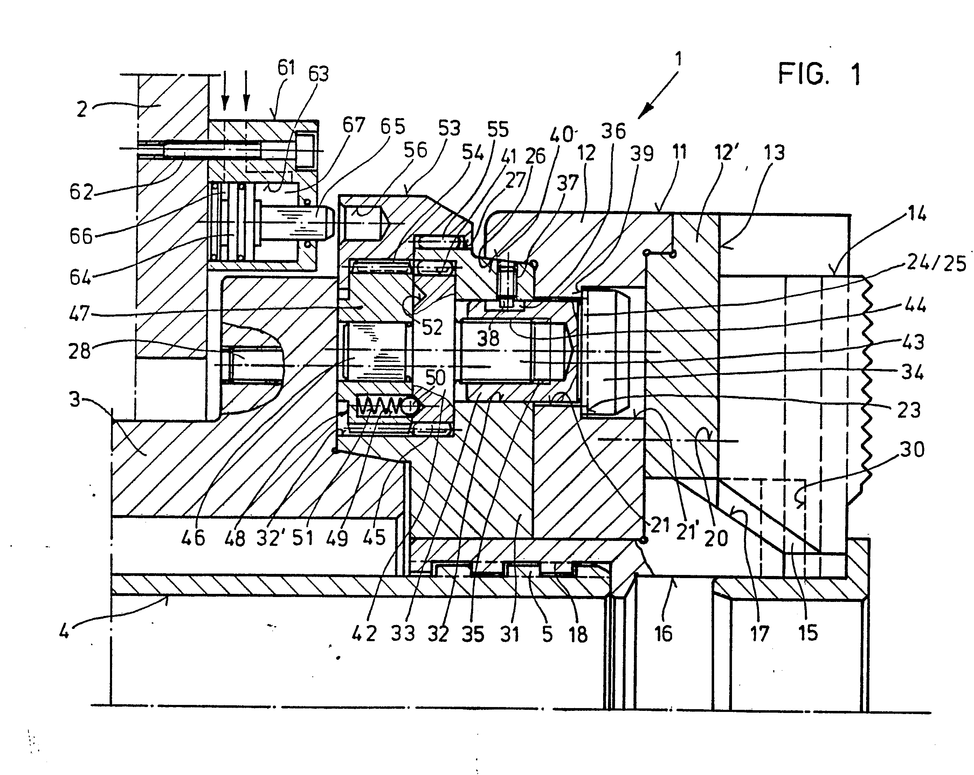

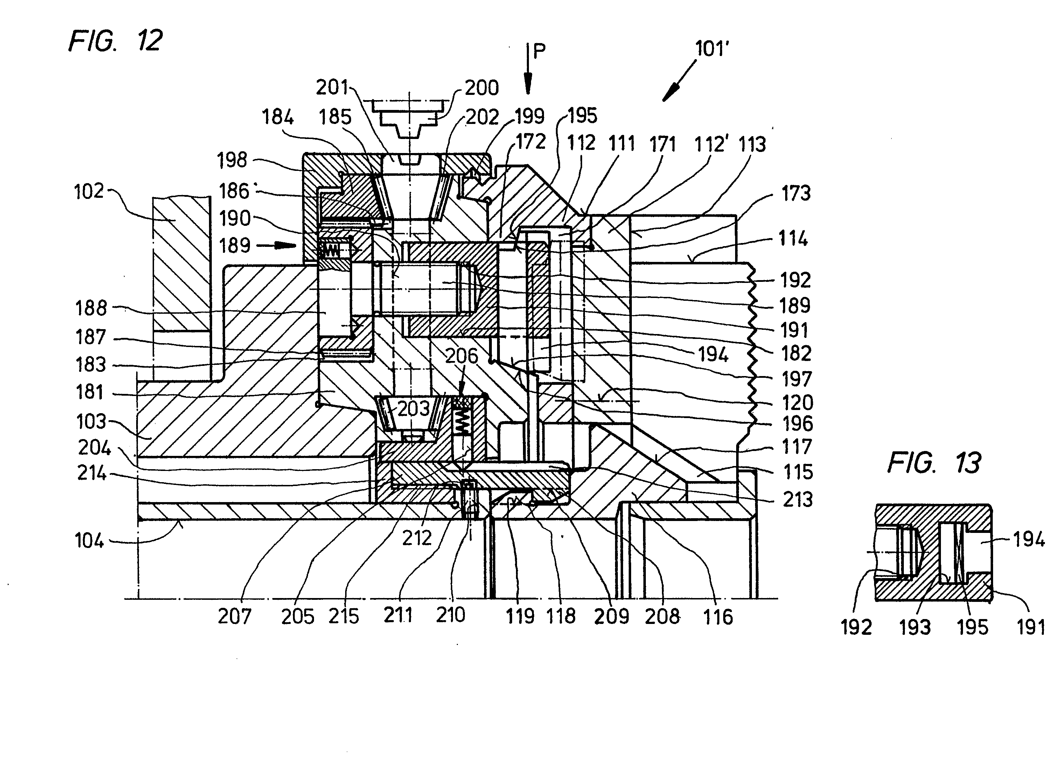

Figur 12   eine weitere Ausführungsform einer Vorrichtung
           nach Figur 1, ebenfalls in einem Axialschnitt,

Figur 13   einen Teilschnitt in Richtung des Pfeiles P
           durch den Kopfbolzen der Vorrichtung nach
           Figur 12,

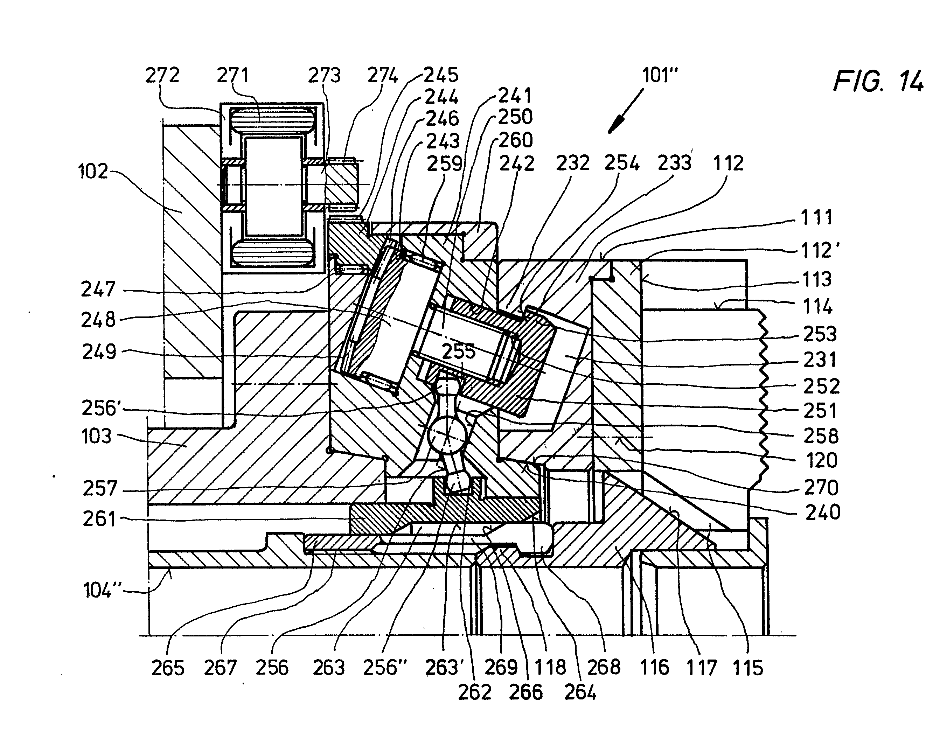

Figur 14   eine weitere Ausführungsform einer Vorrichtung
           nach Figur 1    und

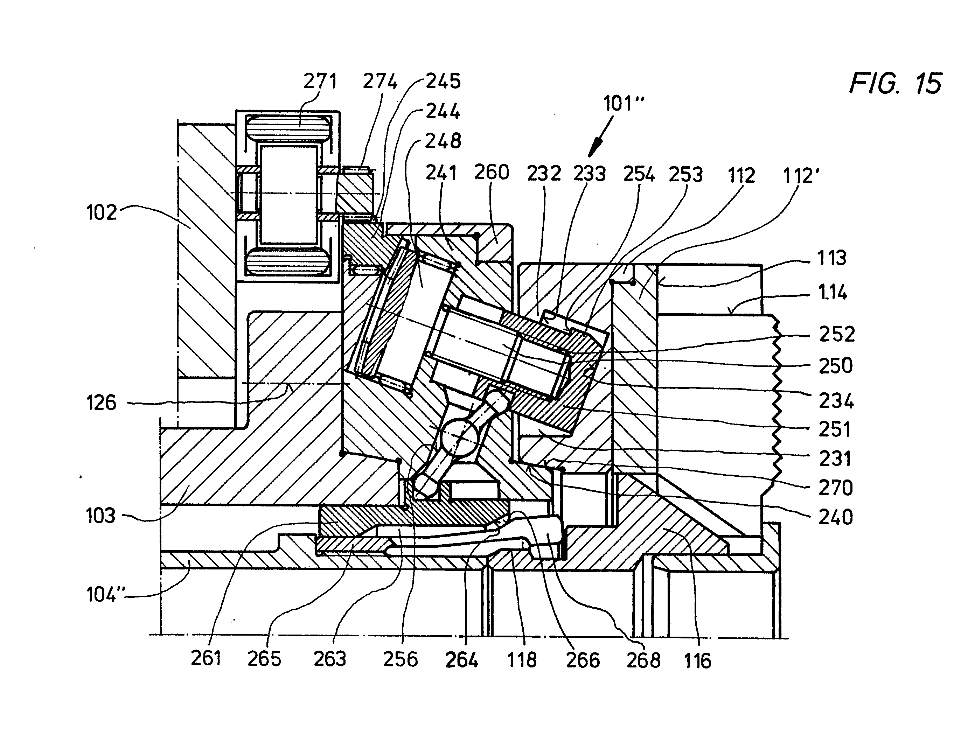

Figur 15   die Vorrichtung nach Figur 14 in einer anderen
           Betriebsstellung der Kopfbolzen.

                                                    ./.

Die in den Figuren 1, 2 und 5 dargestellte und jeweils mit 1 bezeichnete Vorrichtung dient zur auswechselbaren Befestigung eines kraftbetätigten, als Kraftspannfutter 11 ausgebildeten Werkstückhalters an der Drehspindel 3 einer Werkzeugmaschine 2, so daß dieses im Bedarfsfall leicht ausgetauscht werden kann. Das Kraftspannfutter 11 besteht hierbei aus einem zweiteiligen, mittels Schrauben 20 miteinander fest verbundenen Futterkörper 12, 12' und in radial gerichteten in den Futterkörper 12' eingearbeiteten Nuten 13 verschiebbar angeordneten Spannbacken 14, die über geneigt verlaufende Keilnuten 15 mit einem axial verschiebbaren mit in diese eingreifenden Keilhaken 17 ausgestatteten Antriebsglied 16 in Triebverbindung stehen. Eine Axialverschiebung des Antriebsgliedes 16, das über mehrere Klauenverzahnungen 18 mit einer ebenfalls mit Klauenverzahnungen 5 ausgestatteten Zugstange 4 gekoppelt ist, wird somit in eine radiale Verstellbewegung der Spannbacken 14 umgelenkt.

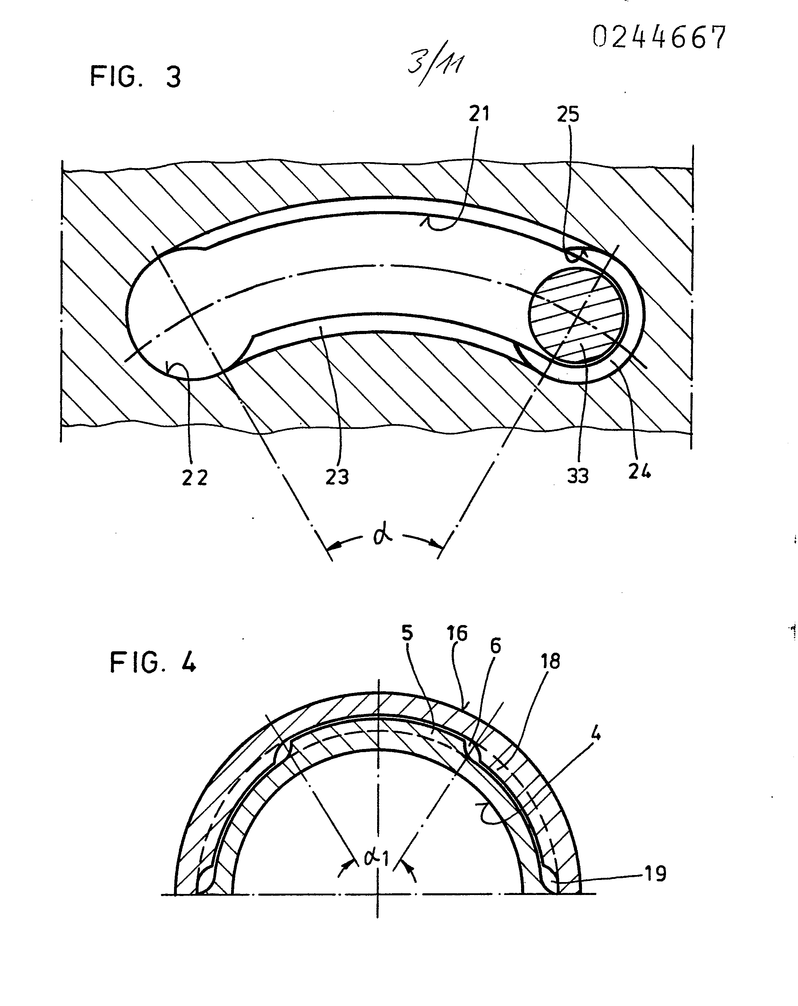

Zur auswechselbaren Befestigung des Kraftspannfutters 11 an der Drehspindel 3 der Werkzeugmaschine 2 ist ein an dieser mittels Schrauben 28 angebrachter Flansch 31 in Form eines Zentrier- und Spannteils vorgesehen, der mit in Ausnehmungen 32 axial verschiebbar eingesetzte Kopfbolzen 33 aufweist, mittels denen das Kraftspannfutter 11 mit dem Flansch 31 verspannbar ist. In den Futterkörper 12 sind dazu, wie dies auch der Figur 3 entnommen werden kann, sich in Umfangsrichtung erstreckende Ausnehmungen 21 eingearbeitet, die in einem Endbereich eine Öffnung 22 zum Einführen der mit einem Bund 34 ausgestatteten Kopfbolzen 33 versehen sind. Außerdem sind die Ausnehmungen 21 jeweils mit einer durch eine Erweiterung 21' gebildeten Hinterschneidung 23 ausgestattet, die von dem Bund 34 des eingeführten Kopfbolzens 33 hintergriffen wird, und in dem anderen Endbereich ist eine Absenkung 24 zur Aufnahme des Bundes 34 zusätzlich eingearbeitet. Dadurch

./.

wird ein in Umfangsrichtung wirkender Anschlag 25 geschaffen, durch den eine Sicherung gegen unbeabsichtigtes Verdrehen des Kraftspannfutters 11 gegenüber dem Flansch 31 gegeben ist. In der in Figur 1 dargestellten Betriebsstellung greifen die Kopfbolzen 33 mit dem Bund 34, die ebenfalls eine Hinterschneidung 39 bilden, in die Absenkung 24 ein, das Kraftspannfutter 11 ist somit mittels einer Kegelfläche 26 fest auf einer Zentrierfläche 40 des Flansches 31 gehalten.

Um diese Verbindung lösen zu können, sind die mittels eines in einer Gewindebohrung 37 eingesetzten und in eine Nut 36 eingreifendes Stiftes 38 drehfest angeordneten Kopfbolzen 33 axial aus der Absenkung 24 heraus so weit zu verschieben, daß diese in der Ausnehmung 21 und der Erweiterung 21' in Umfangsrichtung bewegt werden können. Dazu dient jeweils ein Verstellglied 41, das mittels eines Bundes 42 und einem Wälzlager 45 verdrehbar in einer konzentrisch zu der Ausnehmung 32 angeordneten Ausnehmung 32' gelagert ist und einen mit einem Gewinde 44 ausgestatteten Zapfen 43 aufweist, der in eine in dem Kopfbolzen 33 vorgesehene Gewindebohrung 35 eingeschraubt ist. Bei einer Verdrehung des Verstellgliedes 41 wird demnach der drehfest gehaltene Kopfbolzen 33 in Abhängigkeit von dem Verdrehweg und der Gewindesteigung mehr oder weniger axial verschoben.

Zum gemeinsamen Antrieb der Verstellglieder 41 ist ein den Flansch 31 umgreifendes Hohlrad 53 als Antriebsglied vorgesehen, das eine Innenverzahnung 54 aufweist, in die auf an dem Bund 42 angeformte Zapfen 46 gelagerte Zahnräder 47 eingreifen. Wird demnach das auf einer Zylinderfläche 27 des Flansches 31 mittels eines Wälzlagers 55 gelagerte Hohlrad 53 gegenüber diesem verdreht, werden, da sich die Zahnräder 47 in der Innenverzahnung 54 abwälzen, die Verstellglieder 41 in Drehung versetzt und somit die Kopfbolzen 33 axial verschoben.

./.

Um auszuschließen, daß die Kopfbolzen 33 zu weit axial verschoben oder ungleichmäßig angezogen werden, sind die Zahnräder 47 jeweils über ein Schlagwerk mit den Verstellgliedern 41 trieblich verbunden. Dies wird mittels Federrasten 48 bewerkstelligtr, die durch in Bohrungen 49 der Zahnräder 47 eingesetzte Kugeln 50 und Federn 51 gebildet sind, die mit in den Bund 42 eingearbeiteten kegeligen Ausnehmungen 52 zusammenwirken. Die Triebverbindung zwischen den Zahnrädern 47 und den Verstellgliedern 41 kann somit bei einem zu hohen zu übertragenden Drehmoment, das durch die Anpreßkraft der Federn 51 bestimmbar ist, selbsttätig unterbrochen werden.

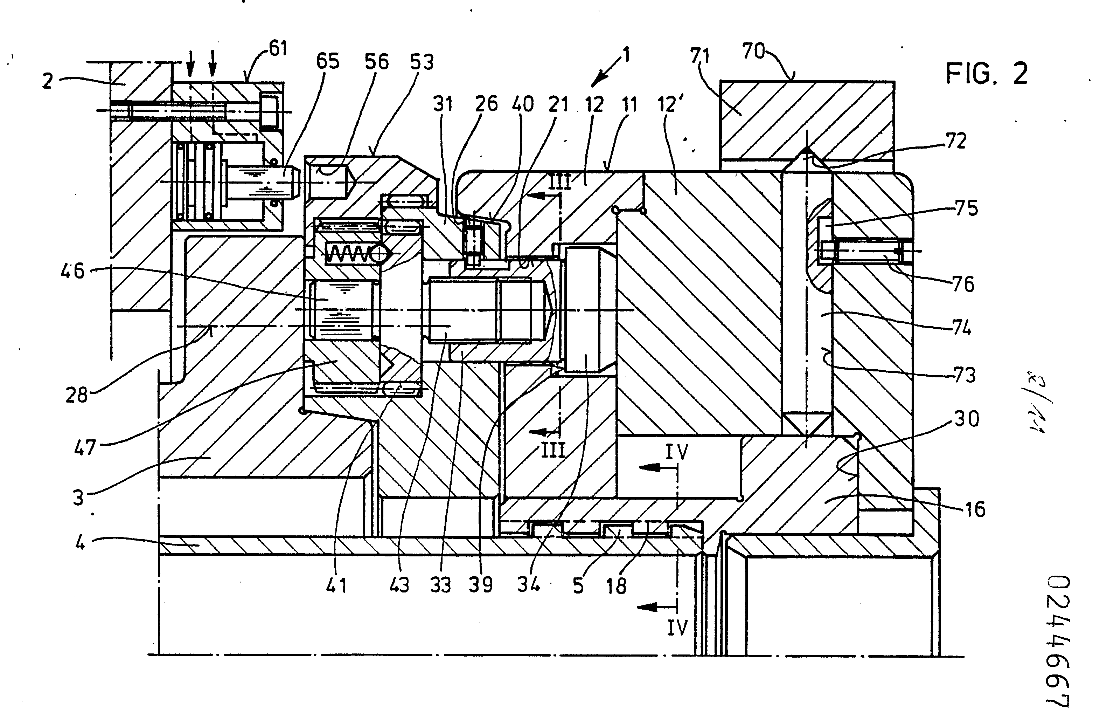

Die Relativverdrehung des Flansches 31 gegenüber dem Hohlrad 53, um die Kopfbolzen 33 axial zu verschieben, kann bei der Ausgestaltung nach den Figuren 1 und 2 mittels der Drehspindel 3 der Werkzeugmaschine 2 bewerkstelligt werden. Dazu ist lediglich das Hohlrad 53 festzuhalten und die Drehspindel 3 ist anzutreiben. Zu diesem Zweck ist an der Werkzeugmaschine 2 mittels Schrauben 62 ein Gehäuse 61 befestigt, in dem in einem Zylinderraum 63 ein achsparallel zu dem Flansch 31 verschiebbarer Kolben 64 eingesetzt ist. Die Kolbenstange des Kolbens 64 ist als Arretierungsstift 65 ausgebildet, der in eine in das Hohlrad 53 eingearbeitete zugeordnete Bohrung 56 einführbar ist.

Wird in der in Figur 1 dargestellten Betriebsstellung dem Druckraum 66 Druckmittel zugeführt, so wird der Kolben 64 nach rechts verschoben und der Arretierungsstift 65 greift in die Bohrung 56 ein, so daß das Hohlrad 53 fixiert ist und bei einer Verdrehung der Drehspindel 3 die Kopfbolzen 33 mittels der Verstellglieder 48 axial verschoben werden. Durch eine Druckmittelzuführung in den Druckraum 67 ist dagegen der Kolben 64 in die in Figur 1 gezeigte Endlage zurückzuführen.

./.



Um das Kraftspannfutter 11 von dem Flansch 31 abnehmen zu können, sind zunächst die Kopfbolzen 33 durch eine Verdrehung der Drehspindel 3 bei arretiertem Hohlrad 53 derart axial zu verschieben, daß deren Bund 54 in der Erweiterung 21' in Umfangsrichtung bewegt werden kann. Sodann wird mit Hilfe der Zugstange 4 durch eine Axialverschiebung das Kraftspannfutter 11 von der Zentrierfläche 40 gelöst, in dem, wie dies in Figur 2 gezeigt ist, das mit der Zugstange 4 trieblich verbundene Antriebsglied 16 des Kraftspannfutters 11 gegen einen an dem Futterkörper 12' angebrachten Anschlag 30 gedrückt wird. Eine Verdrehung des Kraftspannfutters 11 ist nunmehr möglich.

Durch die Vorschubbewegung des Antriebsgliedes 16 wurden außerdem in Bohrungen 73 des Futterkörpers 12' radial verstellbar eingesetzte Bolzen 74 betätigt, mittels denen das Kraftspannfutter 11 in einem Ring 71 eines Handhabungsgerätes 70, das als Transportmittel dient, einzuspannen ist. Die mittels in Nuten 75 eingreifender Stifte 76 gehaltenen Bolzen 74 werden nämlich mit ihrem äußeren Ende durch das Antriebsglied 16 in kegelförmige in den den Futterkörper 12' umgreifenden Ring 71 eingearbeitete Ausnehmungen 72 gedrückt und in dieser Lage arretiert, so daß das Kraftspannfutter 11 in dem Ring 71 gehalten ist. Wird nunmehr der Flansch 31 oder das Kraftspannfutter 11 um einen Winkel $\alpha$ , der der Länge der Ausnehmungen 21 entspricht, verdreht, so kann, sofern die Triebverbindung zwischen der Zugstange 4 und dem Antriebsglied 16 gelöst ist, durch eine Axialverschiebung das Kraftspannfutter 11 von dem Flansch 31 abgenommen werden.

Um bei einer Verdrehung des Kraftspannfutters 11 gegenüber dem Flansch 31 gleichzeitig auch die Verbindung zwischen der Zugstange 4 und dem Antriebsglied 16 lösen zu können, sind in deren Klauenverzahnungen 5 und 18 sich in

./.

Umfangsrichtung erstreckende Freisparungen 6 bzw. 19 eingearbeitet, in die die Klauenverzahnungen 5 und 18, wie dies in Figur 4 dargestellt ist, gegenseitig einführbar sind. Der Öffnungswinkel $\alpha_1$ der Freisparungen 6 und 19 bzw. die Länge der Klauenverzahnungen 5 und 18 entsprechen dem Winkel $\alpha$ , so daß durch eine einzige Verdrehbewegung des Kraftspannfutters 11 beide Verbindungen zu unterbrechen sind und dieses leicht von dem Flansch 31 abgenommen werden kann. Die Montage eines Kraftspannfutters erfolgt in gleicher Weise, wobei die einzelnen Verfahrensschritte in umgekehrter Reihenfolge vorzunehmen sind.

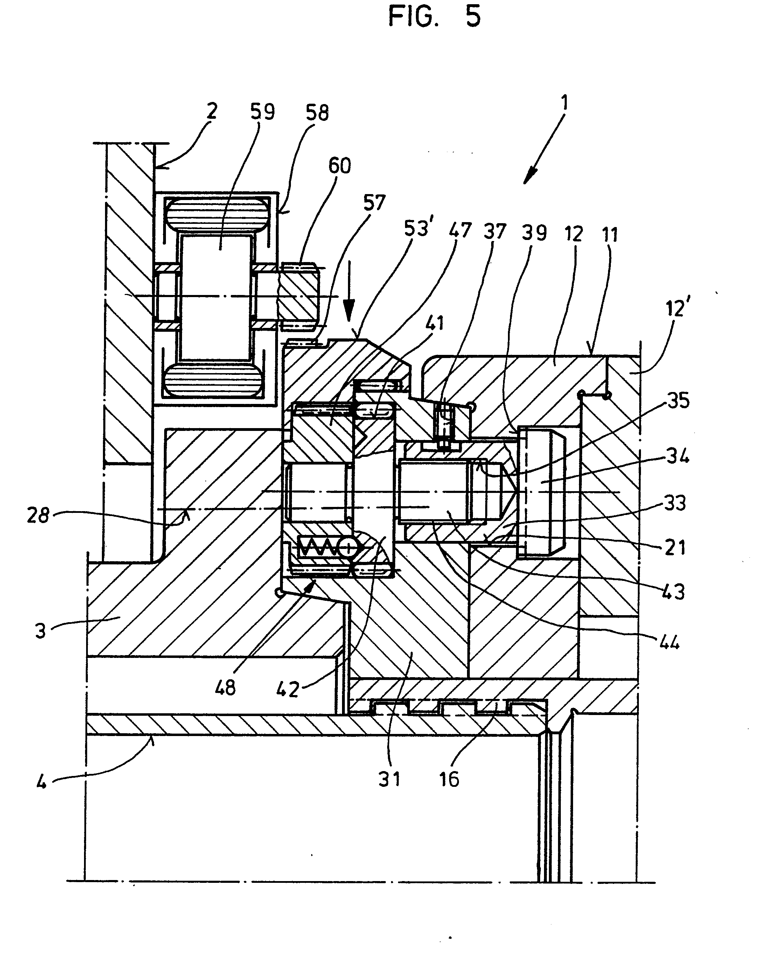

Damit auch bei drehfest gehaltener Drehspindel 3 der Werkzeugmaschine 2 das Kraftspannfutter 11 abgenommen werden kann, ist gemäß dem Ausführungsbeispiel nach Figur 5 zur Verdrehung des Hohlrades 53' gegenüber dem Flansch 31 ein gesonderter Antriebsmotor 59 vorgesehen, der in einem Schlitten 58 höhenverstellbar angeordnet ist. Das Hohlrad 53' ist hierbei des weiteren mit einer Außenverzahnung 57 versehen, mit der ein mit dem Antriebsmotor 59 verbundenes Zahnrad 60 in Eingriff bringbar ist. Die Relativverdrehung des Hohlrades 53' gegenüber dem Flansch 31 und somit die Axialverschiebung der Kopfbolzen 33 ist demnach mit Hilfe des an dieses ankuppelbaren Antriebsmotors 59 zu bewerkstelligen.

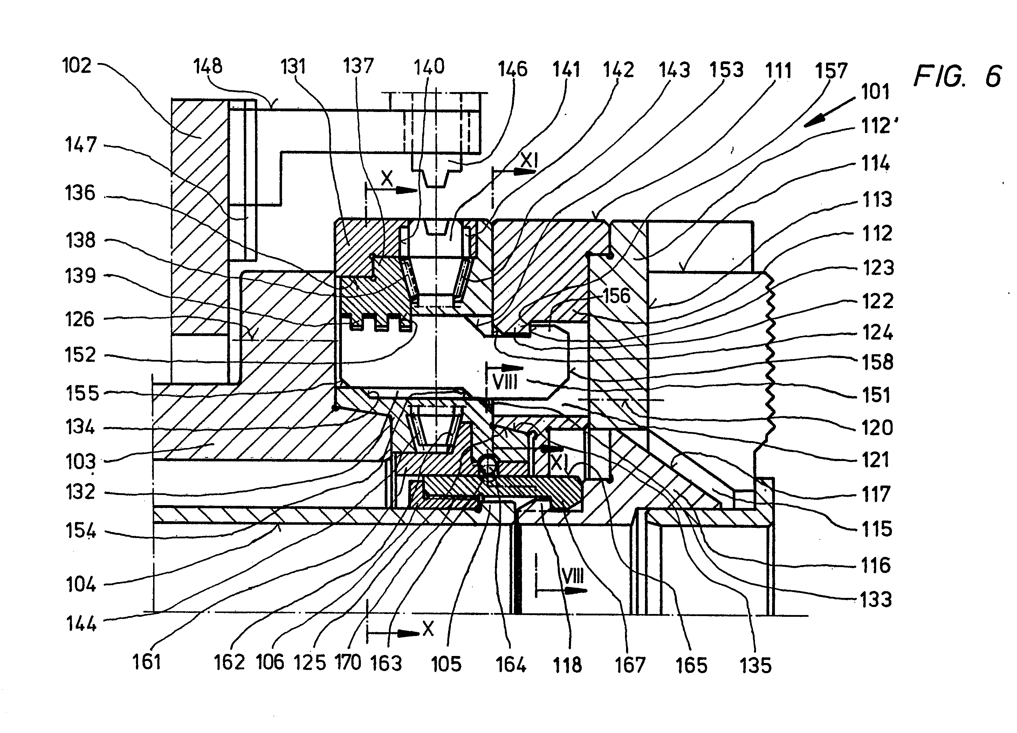

Im Gegensatz zu der in den Figuren 1, 2 und 5 dargestellten Vorrichtung 1, mittels der durch eine Relativverdrehung des Flansches 31 gegenüber der Maschinenspindel 3 die Verbindung des Kraftspannfutters 11 mit dem Flansch 31 hergestellt oder gelöst werden kann, ist bei den Vorrichtungen 101, 101' und 101'' nach den Figuren 6, 12 und 14 vorgesehen, das Kraftspannfutter 111 durch Axial- und Radialbewegungen der jeweiligen Kopfbolzen zu verspannen. Das Kraftspannfutter 111 besteht hierbei ebenfalls aus einem

./.

zweiteiligen durch Schrauben 120 miteinander verbundenen Futterkörpern 112 und 112', in den radial gerichtete. Nuten 113 zur Führung von Spannbacken 114 eingearbeitet sind. Mittels eines axial verschiebbaren Antriebsgliedes 116, dessen Keilhaken 117 in Keilnuten 115 der Spannbacken 114 eingreifen, werden diese betätigt.

Das Kraftspannfutter 111 ist mit einer Zentrierfläche 125 auf einer Gegenfläche 135 eines Flansches 131 aufgesetzt, der als Zentrier- und Spannteil wirksam und durch Schrauben 126 an der Maschinenspindel 103 der Werkzeugmaschine 102 befestigt ist. Und zur Verbindudng des Flansches 131 mit dem Kraftspannfutter 111 dienen gleichmäßig über den Umfang verteilt angeordnete Kopfbolzen 151, die in in den Futterkörper 112 eingearbeitete Ausnehmungen 121 einführbar und mit dem Futterkörper 112 verspannbar sind. Dazu sind die Kopfbolzen 151 jeweils mit einer durch einen Vorsprung 156 gebildeten Anschlagfläche 157 und die Ausnehmungen 121 mit zugeordneten Hinterschneidungen, die ebenfalls durch Vorsprünge 122 und mit den Anschlagflächen 157 zusammenwirkenden Anschlagflächen 123 gebildet sind, versehen.

Die Kopfbolzen 151 sind bei der Vorrichtung 101 axial verschiebbar und werden dabei gleichzeitig auch radial bewegt. Um dies bewerkstelligen zu können, sind die in den Flansch 131 eingearbeiteten Ausnehmungen 132, in die die Kopfbolzen 131 eingesetzt sind, mit Schrägflächen 133 und 134 ausgestattet, außerdem sind an dem Futterkörper 112 Schrägflächen 124 angearbeitet. Und die Kopfbolzen 131 weisen ebenfalls Schrägflächen 153, 154 und 155 auf, die mit den Schrägflächen 124 des Futterkörpers 112 und den Schrägflächen 133 und 134 des Flansches 131 zusammenwirken.

./.

0244667

Zur gemeinsamen Verstellung der Kopfbolzen 151 ist in einer weiteren Ausnehmung 136 des Flansches 131 ein Antriebsglied in Form eines Zahnrades 137 angeordnet, das mittels eines Gewindes 139 unmittelbar in ein in die Kopfbolzen 151 eingearbeitetes Gewinde 152 eingreift und das über eine Verzahnung 138 mit einem Ritzel 143 in Triebverbindung steht. Das Ritzel 143 ist hierbei auf einer Welle 141 gelagert, die mittels Wälzlager 142 drehbar in einer in den Flansch 131 eingearbeiteten radial gerichteten Bohrung 140 gelagert ist. Mit Hilfe eines Werkzeuges 146, das mittels eines Halters 148 in einer an der Werkzeugmaschine 102 angebrachten Führungsschiene 147 zustellbar befestigt ist, kann somit über das Ritzel 143 das Zahnrad 137 angetrieben werden.

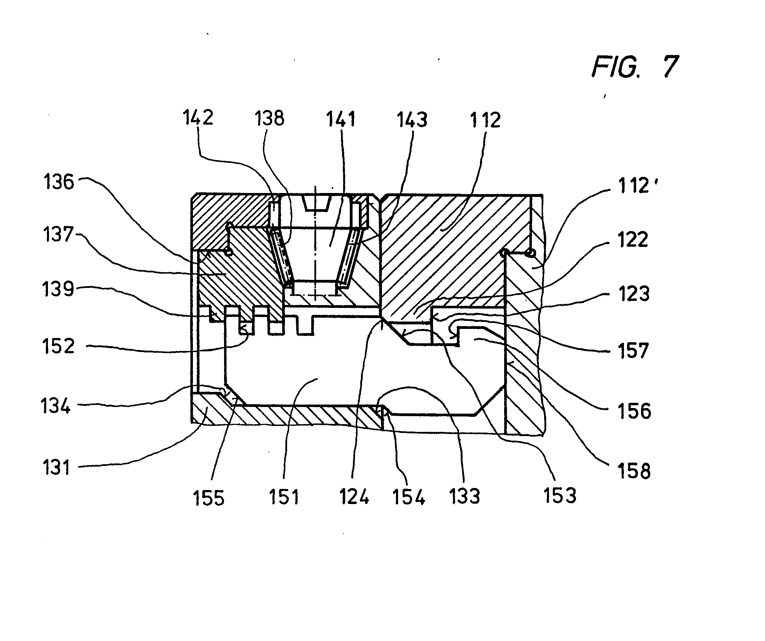

Wird ausgehend von der in Figur 1 dargestellten Betriebsstellung das Zahnrad 137 verdreht, so werden die Kopfbolzen 151 durch die Gewinde 139 und 152 in Richtung des Werkzeugträgers 111 verschoben und die durch die Vorsprünge 122 und 156 bewerkstelligte Verspannung wird gelöst. Durch diese Axialverschiebung werden die Kopfbolzen 151 aber auch in radialer Richtung nach innen verstellt, da die an diesen angebrachte Schrägfläche 153 an der Schrägfläche 124 des Futterkörpers 112 zur Anlage kommt. Die Kopfbolzen 151 werden, wie dies in dem Ausschnitt gemäß Figur 7 dargestellt ist, so weit nach innen geschoben, daß deren Vorsprünge 156 radial innerhalb der Vorsprünge 122 des Futterkörpers 112 angeordnet sind, so daß das Kraftspannfutter 111 durch eine Axialbewegung von dem Flansch 131 abgenommen werden kann. Mit Hilfe der Stirnfläche 158 der Kopfbolzen 151, die sich an den Futterkörper 112' anlegen, kann das Kraftspannfutter 111 geringfügig von der Zentrierfläche 135 abgedrückt werden.

./.

Bei einer Zustellbewegung der Kopfbolzen 151 nach links werden dagegen durch Zusammenwirken der Schrägflächen 133 und 134 des Flansches 131 mit den Schrägflächen 154 und 155 der Kopfbolzen 151 diese wiederum nach außen bewegt. Die Anschlagfläche 157 des Vorsprunges 156 wird somit durch die Axialverschiebung der Kopfbolzen 151 gegen die Fläche 123 des an dem Futterkörper 112 angebrachten Vorsprunges 122 gepreßt, das Kraftspannfutter 111 ist auf diese Weise sicher an dem Flansch 131 befestigt.

Zusammen mit der Verspannung der Kopfbolzen 151 mit dem Futterkörper 112 ist auch die Triebverbindung zwischen dem Antriebsglied 116 der Spannbacken 114 und einer auf dieses einwirkenden Zugstange 104 zu lösen. Dazu sind an dem Antriebsglied 116 angebrachte Klauen 118 durch eine Verdrehbewegung außer Eingriff zu bringen mit Klauen 167, die an einem Zwischenglied 165 angearbeitet sind. Die Klauen 118 und 167 sind dazu, wie dies in den Figuren 8 und 9 gezeigt ist, mit Freisparungen 119 bzw. 168 versehen, in die die Klauen des Gegenstückes durch die Verdrehbewegung jeweils einführbar sind. Das Zwischenglied 165 ist hierbei mittels eines Gewindes 170 an einem Ring 106 befestigt, der verdrehbar auf der Zugstange 104 gehalten ist. Bei einer Verstellbewegung der Zugstange 104 nach links ist der Ring 106 an dem Bund 105 abgestützt, bei einer Zustellbewegung nach rechts wird der Ring 106 von dem Zwischenglied 165 mitgenommen, das von den Klauen 118 des Antriebsgliedes 116, das mit Hilfe der Stirnflächen des Bundes 105 nach rechts verschoben wird, nachgeführt wird.

Zur begrenzten Verdrehung des Zwischengliedes 165 ist ein Zahnrad 161 vorgesehen, dessen Verzahnung 162 mit einem auf der Welle 141 angeordneten Zahnrad 144 zusammenwirkt. Außerdem ist in einer Ausnehmung 163 des Zahnrades 161 eine Kugel 164 eingesetzt und in das Zwischenglied 165

./.

sowie den Flansch 131 sind Ausnehmungen 166 bzw. 145 eingearbeitet, in die die Kugel 164, wie dies in den Figuren 8 und 9 dargestellt ist, ausweichen kann.

In der in Figur 8 gezeigten Betriebsstellung sind die Klauen 118 und 167 nicht miteinander in Eingriff. Das Antriebsglied 116 kann somit, um einen Wechsel des Kraftspannfutters 111 vorzunehmen, axial abgezogen werden. Wird jedoch das Zahnrad 161 verdreht, so wird über die Kugel 164, die in die Ausnehmung 166 eingreift, das Zwischenstück 165 um eine Teilung der Klauen 118 und 167 mitgenommen. Nach einer Verdrehung des Zwischengliedes 165 um einen entsprechenden Winkel kann die Kugel 164 dagegen, wie dies in Figur 9 dargestellt ist, in die Freisparung 145 des Flansches 131 ausweichen, so daß die Triebverbindung zwischen dem Zahnrad 161 und dem Zwischenglied 165 gelöst ist und dieses in Eingriffstellung der Klauen 118 und 167 verharrt. Die Kopfbolzen 151 können dagegen mit Hilfe des Antriebsgliedes 137 weiterbewegt werden. Und da in das Zwischenglied 165 eine weitere Freisparung 169 eingearbeitet ist, ist auch eine Verdrehung des Zwischengliedes 165 über 360° hinaus ohne weiteres möglich.

Bei der Vorrichtung 101' nach Figur 12 sind die mit 191 bezeichneten, jeweils in einer Ausnehmung 182 eines Flansches 181 drehfest gehaltenen und in eine Freisparung 171 des Futterkörpers 112 eingreifenden Kopfbolzen mit eingesetzten Kulissensteinen 194 ausgestattet, die in einer abgesetzten Ausnehmung 193 radial verschiebbar geführt sind. Des weiteren sind an den Kulissensteinen 194 zwei Schrägflächen 195 und 196 angearbeitet, die mit einer an dem Futterkörper 112 vorgesehenen durch einen Vorsprung 172 gebildeten Schrägfläche 173 und einer an dem Flansch 181 vorgesehenen Schrägfläche 197 zusammenwirken. Durch eine Axialverschiebung der Kopfbolzen 181 werden somit die Kulissensteine 194 radial nach innen oder außen verschoben.

./.

Zur Verstellung der Kopfbolzen 181 dient wiederum ein Verstellglied 188, das mittels einer angeformten Gewindespindel 189 in ein Innengewinde 192 der Kopfbolzen 191 eingreift und über ein Zahnrad 187 mit einem Antriebsglied 184 in Triebverbindung steht. Die Verstellglieder 188 sowie die diesen zugeordneten Zahnräder 187, die jeweils zur Drehmomentbegrenzung über ein Schlagwerk 189 trieblich miteinander verbunden sind, sind gemeinsam in Ausnehmungen 183 des Flansches 181 drehbar gelagert. Und über Verzahnungen 185 und 186 ist das Antriebsglied 184 mit einem auf einer Welle 201 gehaltenen Ritzel 202 sowie den Zahnrädern 187 in Triebverbindung. Durch eine Abdeckung 198 sowie eine Labyrinthdichtung 199 wird verhindert, daß Schmutz zu den in dem Flansch 181 angeordneten Bauteilen gelangt.

Wird somit mit Hilfe eines Verdrehwerkzeuges 200 die in einer Bohrung 190 des Flansches 181 gelagerte Welle 201 verdeht, so werden die Kopfbolzen 181 je nach Drehrichtung nach links oder rechts verschoben und die in diese eingesetzten Kulissensteine 194 werden bei Abnahme des Kraftspannfutters 111 durch die Schrägflächen 173 radial nach innen in die strichlinierte Lage verschoben, so daß dieses ungehindert entfernt werden kann. Zum Verspannen dagegen werden die Kulissensteine 194 durch die Schrägflächen 197 gegen die Vorsprünge 172 gepreßt, auf diese Weise ist das Kraftspannfutter 111 fest mit dem Flansch 181 verbunden.

Die Triebverbindung zwischen dem Antriebsglied 116 der Spannbacken 114 und der Zugstange 104 wird mit Hilfe eines Zwischengliedes 207 bewerkstelligt, an dem mit in Umfangsrichtung verlaufenden Freisparungen 209 versehene Klauen 208 angebracht sind, die mit den ebenfalls mit Freisparungen 119 ausgestatteten Klauen 118 des Zwischengliedes 207 zusammenwirken. Durch eine Verdrehung des Zwischengliedes 207

./.

können somit die Klauen 118 und 208 auf Lücke gestellt werden, das Kraftspannfutter kann in dieser Betriebsstellung axial abgenommen werden.

Um den Verdrehweg des Zwischengliedes 207 auf eine Teilung der Klauen 118 und 208 zu begrenzen, ist in die Zugstange 104 in einer Gewindebohrung 210 ein Bolzen 211 eingesetzt, der in eine in das Zwischenglied 207 eingearbeitete ringnutförmige Ausnehmung 212 eingreift. Und zum Antrieb des Zwischengliedes 207 dient ein Zahnrad 204, das mit einem auf der Welle 201 angeordneten Ritzel 203 zusammenwirkt. Außerdem ist in einer in das Zahnrad 204 eingearbeiteten Bohrung 205 eine Federraste 206 eingesetzt und das Zwischenglied 207 ist mit einem Längsschlitz 213 versehen, in die die Federraste 206 zur Mitnahme über den durch die Ausnehmung 212 vorgegebenen Bereich eingreift. Über einen Ring 214, an dem das Zwischenglied 207 mittels eines Gewindes 215 befestigt ist, wird die axiale Mitnahme in gleicher Weise bewerkstelligt wie bei dem Ausführungsbeispiel nach Figur 6.

Bei der Vorrichtung 101'' nach den Figuren 14 und 15 sind die zur lösbaren Koppelung des Kraftspannfutters 111 in einem Flansch 241 angeordneten Kopfbolzen 251 in Hauptachsrichtung geneigt, so daß durch eine Verschiebung der Kopfbolzen 251 die an diesen angebrachten, nach außen gerichteten Vorsprünge 253 nach innen verstellt werden und somit das Kraftspannfutter 111 abgenommen werden kann. Gleichzeitig wird dabei auch die Triebverbindung zwischen dem Antriebsglied 116 der Spannbacken 114 und der Zugstange 104'' gelöst.

Zum Antrieb der Kopfbolzen 251 dienen wiederum mittels Wälzlager 259 in Bohrungen 243 des Flansches 241 drehbar gelagerte Verstellglieder 248, die über Gewindespindeln 250

./.

jeweils in eine Gewindebohrung 252 der verschiebbar in den Ausnehmungen 242 des Flansches 241 eingesetzten Kopfbolzen 251 eingreifen. Und über eine Stirnverzahnung 249 stehen die Verstellglieder 248 mit einem gemeinsamen Antriebsglied 244 in Triebverbindung, das mittels eines Wälzlagers 247 auf dem Flansch 241 drehbar gelagert ist und eine Außenverzahnung 245 sowie eine mit den Verzahnungen 249 der Verstellglieder 288 zusammenwirkende Verzahnung 246 aufweist.

Die Kopfbolzen 251 greifen auch bei diesem Ausführungsbeispiel in in den Futterkörper 112 eingearbeitete Ausnehmungen 231 ein, die jeweils eine durch einen nach innen ragenden Vorsprung 232 gebildete Anschlagfläche 233 aufweisen. Bei aufgespanntem auf einer Zentrierfläche 270 des Flansches 241 mittels einer Gegenfläche 240 des Futterkörpers 112 aufgesetztem Kraftspannfutter 111 liegen die Anschlagflächen 233 an den durch die Vorsprünge 253 der Kopfbolzen 251 gebildeten Anschlagflächen 254 an, so daß der Futterkörper 112 fest gegen den mit einer Abdeckung 260 versehen Flansch 241 gepreßt wird.

Soll jedoch das Kraftspannfutter 111 von der Werkzeugspindel 103 der Werkzeugmaschine 102 abgenommen werden, so ist bei diesem Ausführungsbeispiel mit Hilfe eines in einem Schlitten 272 zustellbar gelagerten Rotationsmotors 271 das Antriebsglied 244 zu verdrehen. Auf der Welle 273 des Rotationsmotors 271 ist dazu ein Zahnrad 274 drehfest gelagert, das in die Verzahnung 245 des Antriebsgliedes 244 einführbar ist, so daß dieses verdreht werden kann. Und da die Verdrehbewegung der mit diesem über die Verzahnung 246 und 249 trieblich verbundenen Verstellglieder 248 mit Hilfe der Gewindespindel 250 in axiale Verstellbewegungen der Kopfbolzen 251 umgelenkt werden und diese außerdem in Achsrichtung geneigt angeordnet sind, werden, wie dies in

./.

Figur 15 dargestellt ist, die Vorsprünge 253 soweit nach innen verstellt, daß das Kraftspannfutter 111 ohne Behinderung abgenommen werden kann. Mit Hilfe der sich an der Stirnfläche 234 der Ausnehmungen 231 abstützenden Kopfbolzen 251 kann hierbei das Kraftspannfutter 111 von der Zentrierfläche 270 gelöst und geringfügig abgedrückt werden.

Durch die Verstellbewegung der Kopfbolzen 251 wird gleichzeitig aber auch die Triebverbindung des Antriebsgliedes 116 mit der Zugstange 104'' gelöst. Dies wird mittels einer Schiebemuffe 261 bewerkstelligt, die über einen in einer Bohrung 258 des Flansches 241 mittels einer Kugelfläche 257 verschwenkbar gelagerten Hebel 256 mit einem der Kopfbolzen 251 trieblich verbunden ist. Das eine Ende 256' des Hebels 256 greift in eine in den Kopfbolzen 251 eingearbeitete Ausnehmung 255 ein, das andere Ende 256'' ist in einer Ausnehmung 262 der Schiebemuffe 261 gehalten.

Zur Koppelung der Zugstange 104'' mit dem Antriebsglied 116 ist mittels eines Gewindes 267 an der Zugstange 104'' ein Kupplungsglied 265 aufgeschraubt, das mit Kupplungsklauen 268 versehen ist, die mit den Klauen 118 des Antriebsgliedes 116 zusammenwirken. Außerdem sind in das Kupplungsglied 265 Längsschlitze 269 eingearbeitet und der geschlitzte Bereich ist vorgespannt, so daß die Kupplungsklauen 268 selbsttätig nach außen verschwenkt werden.

In der in Figur 14 gezeigten Betriebsstellung liegen die Kupplungsklauen 268 an einer durch eine Freisparung 263 gebildeten Fläche 263' der Schiebemuffe 261 an. Wird diese jedoch, wie dies in Figur 15 dargestellt ist, durch eine Verstellbewegung des Kopfbolzens 251 nach links verschoben, so können die Kupplungsklauen 268 aufgrund der Vorspannung des geschlitzten Bereiches des Kupplungsgliedes 265 nach außen schwenken und die Triebverbindung mit dem Antriebsglied 116 ist gelöst.

Bei einer Verstellbewegung des Kopfbolzens 251 nach links wird dagegen mit Hilfe des Hebels 256 die Schiebemuffe 261 nach rechts bewegt und über die an dieser und dem Kupplungsglied 265 abgearbeiteten Schrägflächen 264 und 266 werden die Kupplungsklauen 268 in die in Figur 14 dargestellte Kupplungsstellung gedrückt. Mit einer über den Rotationsmotor 271 eingeleiteten Verstellbewegung des Antriebsgliedes 244 kann somit sowohl die Verbindung zwischen dem Futterkörper 112 und den Kopfbolzen 251 als auch die Triebverbindung zwischen der Zugstange 104'' und dem Antriebsglied 116 in kurzer Zeit gelöst bzw. hergestellt werden.

3. April 1987 e-1
A 8107

DIPL.-ING. GUIDO ENGELHARDT   PATENTANWALT

7990 Friedrichshafen

SMW Schneider & Weißhaupt
GmbH

7996 Meckenbeuren

Patentansprüche:

1. Vorrichtung zur auswechselbaren Befestigung eines kraftbetätigten Werkstückhalters an der Drehspindel einer Werkzeugmaschine,

dadurch gekennzeichnet,

daß an der Drehspindel (3) der Werkzeugmaschine (2) ein den Werkstückhalter (Kraftspannfutter 11; 111) aufnehmender Flansch (31; 131; 181; 241) in Form eines Zentrier- und Spannteils angebracht ist, der zwei oder mehrere über den Umfang verteilt angeordnete stirnseitig abstehende Kopfbolzen (33; 151; 191; 251) als Halteglieder aufweist, die in in den Werkstückhalter (Futterkörper 12; 112) eingearbeitete zugeordnete Ausnehmungen (21; 121; 171; 231) einführbar und mit dem Werkstückhalter (Kraftspannfutter 11;111) verspannbar sind.

2. Vorrichtung nach Anspruch 1,

   d a d u r c h   g e k e n n z e i c h n e t ,

   daß die Kopfbolzen (33) durch eine Relativverdrehung der Drehspindel (3) der Werkzeugmaschine (2) gegenüber dem Flansch (31) mit dem Werkstückhalter (Kraftspannfutter 11) verspannbar sind.

3. Vorrichtung nach Anspruch 1 oder 2,

   d a d u r c h   g e k e n n z e i c h n e t ,

   daß zur axialen Verstellung der drehfest z. B. mittels eines in eine Nut (36) eingreifenden Stiftes (37) in dem Flansch (31) gehaltenen Kopfbolzen (33) diese jeweils über ein Gewinde (35) mit verdrehbar in dem Flansch (31) gelagerten Verstellgliedern (41) verbunden sind, die durch ein Antriebsglied (Hohlrad 53, 53') gemeinsam betätigbar sind.

4. Vorrichtung nach Anspruch 3,

   d a d u r c h   g e k e n n z e i c h n e t ,

   daß die Verstellglieder (41) jeweils mit einem Zahnrad (47) als Zwischenglied versehen sind, die in ein den Flansch (31) umfassendes arretierbares Hohlrad (53, 53') als gemeinsames Antriebsglied eingreifen.

5. Vorrichtung nach Anspruch 3 oder 4,

   d a d u r c h   g e k e n n z e i c h n e t ,

./.

daß die Zahnräuder (47) jeweils über ein beispielsweise durch eine Kugelraste (48) gebildetes Schlagwerk (Ausnehmungen 52) mit den Verstellgliedern (41) in Triebverbindung stehen.

6. Vorrichtung nach einem oder mehreren der Ansprüche 1 bis 5,

d a d u r c h   g e k e n n z e i c h n e t ,

daß zur Axialverstellung der Kopfbolzen (33) mit Hilfe der Drehspindel (3) das Hohlrad (53) mittels eines an einem ein- oder beidseitig von Druckmittel beaufschlagbaren Kolben (64) angebrachten Raststiftes (65), der in eine in dieses eingearbeitete vorzugsweise achsparallel gerichtetete Ausnehmung (56) einführbar ist, arretierbar ist.

7. Vorrichtung nach einem oder mehreren der Ansprüche 1 bis 5,

d a d u r c h   g e k e n n z e i c h n e t ,

daß zur Axialverstellung der Kopfbolzen (33) bei drehfester Drehspindel (3) das Hohlrad (53') mittels eines an dieses ankuppelbaren Motors (59) antreibbar ist.

8. Vorrichtung nach einem oder mehreren der Ansprüche 1 bis 7,

d a d u r c h   g e k e n n z e i c h n e t ,

./.

daß der Werkstückhalter (Futterkörper 12) mit in
Umfangsrichtung verlaufenden vorzugsweise jeweils
eine Hinterhakung (23) aufweisende Ausnehmungen (21)
zur Aufnahme der mit einer beispielsweise durch einen
angeformten Bund (34) gebildeten Hinterschneidung (39)
versehenen Kopfbolzen (33) ausgestattet ist, die in
einem Endbereich (Öffnung 22) der Ausnehmungen (21)
in diese einführbar sind.

9. Vorrichtung nach Anspruch 8,

d a d u r c h   g e k e n n z e i c h n e t ,

daß die die Kopfbolzen (33) aufnehmenden Ausnehmungen
(21) des Werkstückhalters (Futterkörper 12) in dem
anderen Endbereich jeweils mit einem diese in Umfangsrichtung arretierenden Anschlages (25) versehen sind.

10. Vorrichtung nach Anspruch 9,

d a d u r c h   g e k e n n z e i c h n e t ,

daß der Anschlag (25) durch eine den Bund (34) der
Kopfbolzen (33) aufnehmenden Einsenkung (24) gebildet
ist.

11. Vorrichtung nach Anspruch 1,

d a d u r c h   g e k e n n z e i c h n e t ,

daß die Kopfbolzen (131; 191; 251) durch eine gemeinsame
radiale Verstellung an diesen jeweils angebrachter in
die mit durch Vorsprünge (122; 172; 232) gebildeten
Hinterschneidungen (Anschlagfläche 123; 173; 233)
versehene Ausnehmungen (121; 171; 231) des Werkstückhalters (Futterkörper 112) eingreifende Hinterhakungen
(Vorsprung 156;253; Kulissenstein 194) mit diesem
verriegelbar sind.

.∤.

12. Vorrichtung nach Anspruch 11,

d a d u r c h   g e k e n n z e i c h n e t ,

daß zur Betätigung der drehfest z. B. in einer Ausnehmung (132; 182) des Flansches (131; 181; 241) gehaltenen Kopfbolzen (151; 191; 251) ein zentrales Antriebsglied (137; 184; 244) vorgesehen ist, das mit den Kopfbolzen (151; 191; 251) unmittelbar oder über Zwischenglieder (Verstellglied 188; 248) in Triebverbindung steht und mittels eines Verdrehwerkzeuges (146; 200; 271) antreibbar ist.

13. Vorrichtung nach Anspruch 11 oder 12,

d a d u r c h   g e k e n n z e i c h n e t ,

daß zur radialen Verstellung·der Hinterhakungen (Vorsprung 156; 253; Kulissenstein 194) der Kopfbolzen (131; 191; 251) an dem Flansch (131) und/oder dem Werkstückhalter (Futterkörper 112') in Verstellrichtung der Kopfbolzen (131; 191; 251) geneigte Schrägflächen (124; 133, 134; 173, 174) angebracht sind, an denen diese ganz oder teilweise zwangläufig geführt sind, oder daß die Kopfbolzen (251) zur Längsachse des Flansches (241) in Richtung des Werkstückhalters (111) geneigt angeordnet sind.

14. Vorrichtung nach einem oder mehreren der Ansprüche 11 bis 13,

d a d u r c h   g e k e n n z e i c h n e t ,

daß die Hinterhakungen der Kopfbolzen (131; 191; 251) durch an diesen angeformte radial abstehende Vorsprünge (156; 253) oder durch in diese eingesetzte durch an dem Werkstückhalter (Futterkörper (112) und/oder dem Flansch (181) vorgesehene Schrägflächen (173, 174) radial verschiebbare Kulissensteine (194) gebildet sind.

15. Vorrichtung nach einem oder mehreren der Ansprüche 11 bis 14,

d a d u r c h   g e k e n n z e i c h n e t ,

daß die Kopfbolzen (151) über ein in das Antriebsglied (137) eingearbeitetes Innengewinde (139) mit diesem unmittelbar trieblich verbunden sind.

16. Vorrichtung nach einem oder mehreren der Ansprüche 11 bis 14,

d a d u r c h   g e k e n n z e i c h n e t ,

daß die Kopfbolzen (191; 251) über ein mit einer Gewindespindel (188; 250) versehenes, verdrehbar in dem Flansch (181; 241) gelagertes Verstellglied (188; 248) als Zwischenglied mit dem Antriebsglied (184; 244) trieblich verbunden sind.

17. Vorrichtung nach Anspruch 16,

d a d u r c h   g e k e n n z e i c h n e t ,

daß die Verstellglieder (188; 248) jeweils über eine Außenverzahnung (249) oder ein mit diesen verbundenes Zahnrad (187) mit dem in oder auf dem Flansch (131; 241) drehbar gelagerten, diesen teilweise umfassenden Antriebsglied (184; 244) in Triebverbindung stehen.

18. Vorrichtung nach einem oder mehreren der Ansprüche 11 bis 17,

d a d u r c h   g e k e n n z e i c h n e t ,

./.

daß die mit den Verstellgliedern (188) zusammenwirkenden Zahnräder (187) jeweils über ein beispielsweise durch eine Kugelraste gebildetes Schlagwerk (189) mit den Verstellgliedern (188) in Triebverbindung stehen.

19. Vorrichtung nach einem oder mehreren der Ansprüche 11 bis 18,

d a d u r c h   g e k e n n z e i c h n e t ,

daß zur Betätigung des Antriebsgliedes (184) mittels des Verdrehwerkzeuges (146; 200) in dem Flansch (131; 181) ein Ritzel (143; 202) achssenkrecht zu dessen Längsachse drehbar gelagert ist, über das das Verdrehwerkzeug (146; 200) mit dem Antriebsglied (184) verbindbar ist.

20. Vorrichtung nach einem oder mehreren der Ansprüche 11 bis 18,

d a d u r c h   g e k e n n z e i c h n e t ,

daß zur Betätigung des Antriebsgliedes (244) ein verstellbar angeordneter über eine Außenverzahnung (245) mit diesem trieblich verbindbarer Rotationsmotor (271) vorgesehen ist.

21. Vorrichtung nach einem oder mehreren der Ansprüche 1 bis 20,

d a d u r c h   g e k e n n z e i c h n e t ,

./.

- 8 -

0244667

daß das Antriebsglied (16; 116) des Werkzeughalters (11; 111) über eine oder mehrere axial hintereinander angeordnete Klauenverzahnungen (5; 18; 118; 167; 208; 268) mit einer axial verstellbaren Zugstange (4; 104, 104'') unmittelbar oder über ein Zwischenglied (165; 207; 265) in lösbarer Triebverbindung steht.

22. Vorrichtung nach Anspruch 21,

d a d u r c h   g e k e n n z e i c h n e t ,

daß zum Kuppeln des Antriebsgliedes (16; 116) mit der Zugstange (4) oder mit dem Zwischenglied (165;207) durch eine Relativdrehung deren Klauenverzahnungen (5; 18; 118; 167; 208) mit in Umfangsrichtung verlaufenden Freisparungen (6; 19; 119; 168; 209) versehen sind, in die die an der Zugstange (4) oder dem Zwischenglied (165; 209) und dem Antriebsglied (16; 116) angeformten Klauenverzahnungen (5; 18; 118; 167; 208) einführbar sind.

23. Vorrichtung nach Anspruch 22,

d a d u r c h   g e k e n n z e i c h n e t ,

daß die Klauenverzahnungen (18) und Freisparungen (6; 19) der Zugstangen (4) und des Antriebsgliedes (16) zueinander jeweils unter einem Winkel ($\alpha_1$) angeordnet sind, der dem Unfangswinkel ($\alpha$) der die Kopfbolzen (33) aufnehmenden Ausnehmungen (21) entspricht.

./.

24. Vorrichtung nach Anspruch 22,

d a d u r c h   g e k e n n z e i c h n e t ,

daß das Zwischenglied (165; 207) um einen der Teilung der Freisparungen (119; 167; 209) entsprechenden Winkel gleichzeitig mit dem Antriebsglied (137; 184) der Kopfbolzen (151; 191) begrenzt verdrehbar angeordnet ist.

25. Vorrichtung nach Anspruch 24,

d a d u r c h   g e k e n n z e i c h n e t ,

daß das Zwischenglied (165; 207) über ein Zahnradpaar (144; 162; 203, 204) mit dem dem Antriebsglied (137;184) zugeordneten Ritzel (143; 202) trieblich verbunden ist.

26. Vorrichtung nach Anspruch 24 oder 25,

d a d u r c h   g e k e n n z e i c h n e t ,

daß das Zwischenglied (165; 207) über eine radial verstellbar gehaltene Kugel (164), eine Federraste (206) oder dgl. an dem zugeordneten Zahnrad (204) begrenzt verdrehbar abgestützt ist.

27. Vorrichtung nach Anspruch 21,

d a d u r c h   g e k e n n z e i c h n e t ,

daß zum Kuppeln des Zwischengliedes (265) mit dem Antriebsglied (116) des Werkstückhalters (111) die Klauen (268) des Zwischengliedes (265) an radial federnden Armen (269) angebracht sind, die mittels einer diese umgreifenden axial in Abhängigkeit von der Lage der Kopfbolzen (251) verschiebbaren Hülse (261) in Eingriffstellung bringbar sind.

.  /  .

0244667

28. Vorrichtung nach einem oder·mehreren der
Ansprüche 1 bis 27,

d a d u r c h   g e k e n n z e i c h n e t ,

daß der Flansch (31; 131; 181; 241) zur Aufnahme
des Werkstückhalters (Futterkörper 12; 112) stirnseitig
mit einer kegeligen Zentrierfläche (40; 135; 270)
und der Werkstückhalter (Futterkörper 12; 112) mit
einer angepaßten Gegenfläche 26; 125; 240) versehen
sind.

29. Vorrichtung nach einem oder mehreren der
Ansprüche 1 bis 28,

d a d u r c h   g e k e n n z e i c h n e t ,

daß zur Abstützung des Werkstückhalters (11) in einem
Handhabungsgerät (70) oder einem ähnlichen Transportmittel in dem Werkstückhalter (Futterkörper 12')
zwei oder mehrere radial verstellbar eingesetzte
Bolzen (74) vorgesehen sind, die durch dessen Antriebsglied (16) betätigbar und in Ausnehmungen (72) z. B.
eines den Werkstückhalter (11) umgreifenden Ringes
(71) des Handhabungsgerätes (70) einführbar sind.

2. April 1987   e-1
A 8107

FIG. 1

0244667

0244667

FIG. 2

FIG. 3

21    25

22    23    33    24

$\alpha$

FIG. 4

5    16    6    18    4

$\alpha_1$

19

FIG. 5

FIG. 6

FIG. 7

FIG. 8

FIG. 9

FIG. 10

FIG. 11

131

137

139    151    132    103    104

112

124

151

121

131

8/11

0244667

FIG. 12

FIG. 13

0244667

9/11

FIG. 14

FIG. 15